# EUROPEAN PATENT SPECIFICATION

(11) **EP 1 201 890 B1**
(45) Date of publication and mention of the grant of the patent: **16.06.2010**
(21) Application number: 00309386.1
(22) Date of filing: 25.10.2000
(51) Int. Cl.: F02B 29/04, F01P 11/16

(54) **A diagnostic arrangement for an intercooler**
Eine Diagnoseanordnung für einen Ladeluftkühler
Agencement diagnostique pour un refroidisseur de l'air suralimenté

(43) Date of publication of application: 02.05.2002
(73) Proprietor: JAGUAR CARS LIMITED, Whitley Coventry CV3 4LF (GB)
(72) Inventor: Belton, Chris, Nottingham, NG5 3JF (GB); King, Paul John, Loughborough Leicestershire (GB)
(74) Representative: Holmes, Matthew William

(56) References cited:
- EP-A- 0 323 212
- DE-C- 19 741 864
- FR-A- 2 619 215
- PATENT ABSTRACTS OF JAPAN vol. 1998, no. 11, 30 September 1998 (1998-09-30) & JP 10 153125 A (MAZDA MOTOR CORP), 9 June 1998 (1998-06-09)

## Description

This invention relates to diagnostic arrangements and in particular to a diagnostic arrangement for an intercooler of an engine.

It is known to provide an engine with a heat exchanger in its induction system so as to cool down charge air before it enters the inlet ports and from there the cylinders of the engine. Such heat exchangers are often included in the induction system of supercharged engines and in such installations are commonly referred to as intercoolers or aftercoolers. It is also known to provide such coolers with liquid cooling which may be supplied from the engine's main cooling system by a separate pump and systems of this general configuration are disclosed in US 5,598,705 and EP 0,323,212.

It is necessary for vehicle manufacturers to meet the emissions legislation prevalent in their markets. In some markets it is necessary to provide an on-board-diagnostic (OBD) capability to monitor features which can have an effect on exhaust gas emissions. In the event of a failure of the monitored feature, a fault flag is set to indicate the failure during later servicing of the vehicle. It is also necessary under certain failure conditions to flag a fault to the user so that he knows he should take the vehicle to a dealer for corrective action. Such visual indication is often in the form of an "engine check light" or "malfunction indicator lamp" (MIL).

A system which includes an intercooler might be found, by way of example, associated with a supercharged engine arrangement of a road vehicle. In the context of this application, it will be understood that the term supercharged includes not only engine driven superchargers, but also other forms of forced induction such as exhaust driven superchargers, sometimes known in the art as turbochargers. Forced induction / supercharging is used in connection with an intercooler on many forms of engine such as, for example, both spark and compression ignition engines and also on both two and four stroke engines. In such arrangements, if there is a failure in the intercooler system, then the amount of ignition/fuel injection timing advance which can be used might be compromised. That could lead to a loss of power and driveability and could also have an adverse effect on tailpipe emissions.

It is a disadvantage of many intercooled arrangements that there is no provision on board the vehicle for diagnosing operation of the intercooler system. An arrangement for intercooler diagnostics is, however, proposed in KR97044566 and KR97044567. In these applications, pressure sensors are positioned upstream and downstream of the intercooler and are used to try and detect certain intercooler problems, such as air leaks or blockage.

It is an object of this invention to provide an improved diagnostic arrangement for an intercooler of an engine.

According to the invention, there is provided a diagnostic arrangement for an intercooler of an engine, comprising:
an inlet for passing charge air into said intercooler and an outlet for passing charge air from said intercooler towards one or more inlet ports of said engine;
a first sensor positioned upstream of said intercooler;
a second sensor positioned downstream of said intercooler; and
a controller which communicates with said sensors and which is arranged in use to perform a diagnostic operation on said intercooler,
characterised in that, said sensors comprise air temperature sensors which provide intercooler inlet and outlet temperature signals to said controller and in that, during a said diagnostic operation, said controller performs a comparison between said temperature signals and flags an intercooler fault if there exists, for a predetermined period of time, a sensed difference in temperature between said inlet and outlet temperature signals, which sensed difference exceeds a programmed difference threshold.

Said controller may further comprise a counter, wherein during a said diagnostic operation said controller periodically compares said sensed difference with said programmed difference threshold and increments said counter by a count value if said sensed difference exceeds said programmed difference threshold.

Said controller may decrement or clear said counter if during a said diagnostic operation said sensed difference is determined to be below said programmed difference threshold.

Said controller may store a maximum count value and during a said diagnostic operation may compare a current said count value with said maximum count value and, if said current count value exceeds said maximum count value, replaces for at least one successive said diagnostic operation said maximum count value with said current count value.

Said controller may store a diagnostic count value which is related to said predetermined period of time and, during a said diagnostic operation, may compare said maximum count value with said diagnostic count value.

If said maximum count value does not exceed said diagnostic count value, said controller may perform a next comparison between said sensed difference and said programmed difference threshold.

If said maximum count value exceeds said diagnostic count value, said controller may flag a said intercooler fault.

Said engine may comprise a supercharged engine of a vehicle, said intercooler being disposed downstream of a supercharger of said engine, wherein said controller may suspend or abandon a said diagnostic operation on said intercooler during one or more of the following: a period of high load on said engine; a period of high boost from said supercharger; and a vehicle speed which is above a predetermined level.

Said intercooler may comprise a liquid cooled intercooler which is provided in use with coolant by a coolant pump, wherein a said intercooler system fault is indicative of a potential or actual fault with the delivery of said coolant by said pump or in the operation of said coolant pump itself.

Said diagnostic arrangement may comprise an on-board-diagnostic (OBD) arrangement for monitoring the operation of said intercooler.

The invention also provides a method for diagnosing operation of an intercooler having an inlet for passing charge air into said intercooler and an outlet for passing charge air from said intercooler towards one or more inlet ports of an engine, characterised in that the method includes:
providing intercooler inlet and outlet temperatures signals indicative of the temperature of charge air entering said inlet and exiting said outlet respectively;
comparing said inlet and outlet temperature signals to provide a sensed difference therebetween; and
flagging an intercooler fault if there exists, for a predetermined period of time, a said sensed difference which exceeds a programmed difference threshold.

Said method may also include, during a said diagnostic operation, periodically comparing said sensed difference with said programmed difference threshold and incrementing a counter by a count value if said sensed difference exceeds said programmed difference threshold.

Said method may also include decrementing or clearing said counter if during a said diagnostic operation said sensed difference is determined to be below said programmed difference threshold.

Said method may include storing a maximum count value and, during a said diagnostic operation, comparing a current said count value with said maximum count value and, if said current count value exceeds said maximum count value, replacing for at least one successive said diagnostic operation said maximum count value with said current count value.

Said method may include storing a diagnostic count value which is related to said predetermined period of time and, during a said diagnostic operation, comparing said maximum count value with said diagnostic count value.

Said method may include, if said maximum count value does not exceed said diagnostic count value, performing a next comparison between said sensed difference and said programmed difference threshold.

Said method may include, if said maximum count value exceeds said diagnostic count value, flagging a said intercooler fault.

Said engine may comprise a supercharged engine of a vehicle and said intercooler may be disposed downstream of a supercharger of said engine, said method including suspending or abandoning a said diagnostic operation on said intercooler during one or more of the following: a period of high load on said engine; a period of high boost from said supercharger; and a vehicle speed which is above a predetermined level.

Said intercooler may comprise a liquid cooled intercooler which is provided in use with coolant by a coolant pump, said method including, if a said intercooler fault is flagged, indicating a potential or actual fault with the delivery of said coolant by said pump or a fault in the operation of said pump itself.

Said method may comprise an on-board-diagnostic routine for monitoring the operation of said intercooler.

The invention also provides an article of manufacture comprising:
a computer storage medium having a computer program encoded therein for diagnosing an intercooler of an engine, said intercooler comprising an inlet for passing charge air into said intercooler and an outlet for passing charge air from said intercooler towards one or more inlet ports of said engine, characterised in that said computer program comprises:
   code for determining a sensed difference in temperature of charge air entering said inlet and exiting said outlet respectively; and
   code for flagging an intercooler fault if there exists, for a predetermined period of time, a said sensed difference which exceeds a programmed difference threshold.

Said computer program may further comprise code for periodically comparing, during a said diagnostic operation, said sensed difference with said programmed difference threshold and incrementing a counter by a count value if said sensed difference exceeds said programmed difference threshold

Said computer program may further comprise code for decrementing or clearing said counter if during a said diagnostic operation said sensed difference is determined to be below said programmed difference threshold.

Said computer program may further comprise code for storing a maximum count value and, during a said diagnostic operation, comparing a current said count value with said maximum count value and, if said current count value exceeds said maximum count value, replacing for at least one successive said diagnostic operation said maximum count value with said current count value.

Said computer program may further comprise code for storing a diagnostic count value which is related to said predetermined period of time and, during a said diagnostic operation, comparing said maximum count value with said diagnostic count value.

Said computer program may further comprise code for performing, if said maximum count value does not exceed said diagnostic count value, a next comparison between said sensed difference and said programmed difference threshold.

Said computer program may further comprise code for flagging, if said maximum count value exceeds said diagnostic count value, a said intercooler fault.

Said engine may comprise a supercharged engine of a vehicle and said intercooler may be disposed downstream of a supercharger of said engine, said computer program including code for suspending or abandoning a said diagnostic operation on said intercooler during one or more of the following: a period of high load on said engine; a period of high boost from said supercharger; and a vehicle speed which is above a predetermined level.

Said intercooler may comprise a liquid cooled intercooler which is provided in use with coolant by a coolant pump, said computer program including code for indicating, if a said intercooler fault is flagged, a potential or actual fault with the delivery of said coolant by said pump or a fault in the operation of said pump itself.

Said computer program may comprise an on-board-diagnostic routine for monitoring the operation of said intercooler.

The invention will now be described by way of example only and with reference to the accompanying drawings, in which:

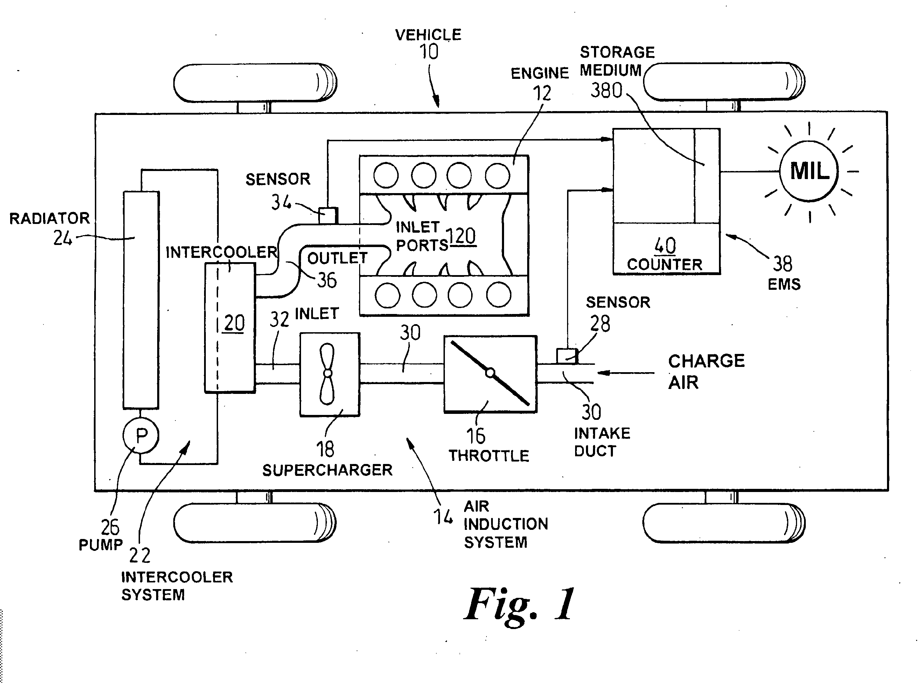

Figure 1 is a schematic diagram of a vehicle including an intercooler: and
Figure 2 is a flow chart of a method of diagnosing the operation of the intercooler of Figure 1.

Referring to the drawings, a vehicle 10 has an engine 12 which is provided with an air induction system 14 comprising an intake throttle 16 upstream of a supercharger 18 which is itself upstream of an intercooler 20.

The intercooler 20 comprises a liquid cooled intercooler and forms part of an intercooler system 22. The intercooler system includes the intercooler 20 itself, along with a cooling circuit comprising a radiator 24 and an intercooler coolant supply pump 26, which may be an electrical pump.

The intercooler system 22 further comprises an intake air temperature sensor 28, which is upstream of the throttle 16 and is arranged in use to sense the temperature of charge air entering along an intake duct 30 and into an inlet 32 of the intercooler 20. An outlet air temperature sensor 34 is positioned downstream of the intercooler 20 in its outlet 36 and is arranged in use to sense the temperature of charge air leaving the intercooler 20 and heading towards one or more inlet ports 120 of the engine 12.

The vehicle 10 further comprises a controller in the form of an engine management system (EMS) 38, which is arranged in use to receive charge air temperature signals from the air temperature sensors 28, 34. The EMS 38 uses the temperature signals from the sensors 28, 34 to perform an on-board diagnostic (OBD) operation on the intercooler system 22 and, in the event of determining an apparent fault in the intercooler system 22, the EMS 38 is arranged to flag a fault condition. The presence or absence of a fault condition is determined from the state of a counter 40 forming part of the EMS 38.

The diagnostic routine is performed in vehicle by on-board-diagnostic (OBD) software code which is encoded in the form of a computer program in a computer storage medium 380 forming part of the EMS 38. A similar computer program may be encoded in a similar fashion onto a further computer storage medium and used for reading fault flags and diagnosing fault conditions during vehicle repair or servicing.

If the EMS 38 determines a fault condition, it flags an intercooler fault by setting an internal fault flag and/or illuminating a user visible malfunction-indicator-lamp (MIL). A fault determined in this manner indicates an actual or at least potential fault with not only the intercooler 20 itself, but also shows up faults in the delivery of coolant to the intercooler 20. Such faulty coolant delivery may arise through faults with the coolant pump 26, such as reduced or non-operation, and/or faults in the radiator 24, such as leaks or blockages.

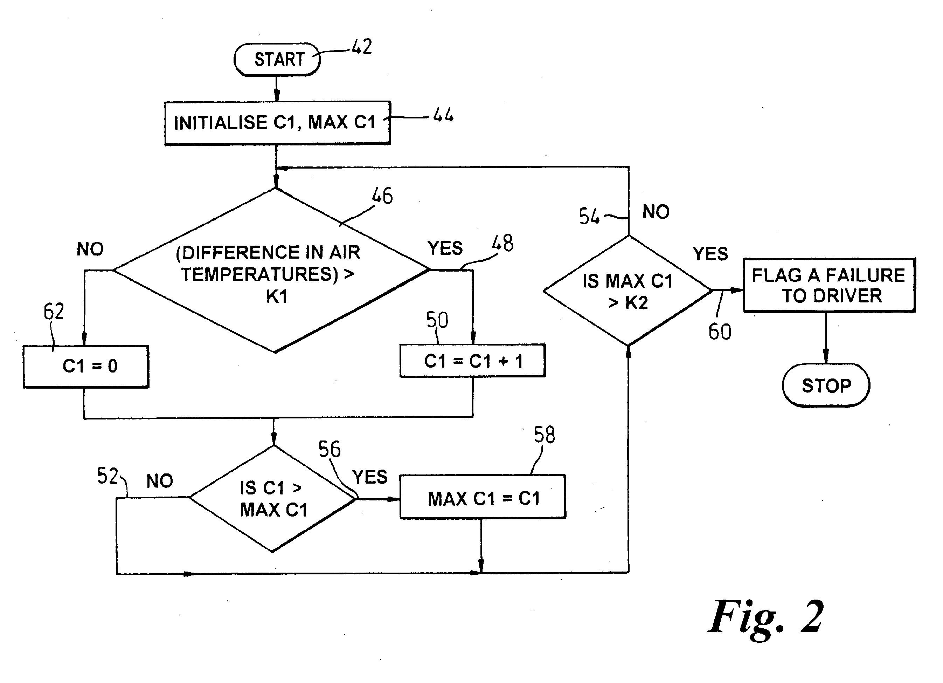

The computer program used to implement the OBD diagnostic operation will now be described in greater detail with particular reference to Figure 2.

At the start (step 42) of a cycle of the diagnostic routine, the EMS 38 initialises (step 44) the counter 40 to a count value C1 and sets a maximum count value (MaxC1), the count value C1 and the maximum count value MaxC1 being variables. A default maximum count value for MaxC1 is preprogrammed into the EMS 38 during engine tune set-up and a default value for MaxC1 for a normally operating system may be for example a count value in the region of 50 seconds.

The EMS 38 derives the temperature difference between the air temperatures sensed by the sensors 28, 34 and compares that difference with a programmed difference threshold in the form of a constant K1 (step 46). From engine tuning and development testing performed to date by the applicants, a suitable value for K1 is believed to lie in the region of 20°C.

If the difference in temperature between the signals from the sensors 28, 34 exceeds the threshold K1, (step 48) then the count value C1 is incremented (C1=C1+1) (step 50). The current count value C1 indicates how long there has been a temperature difference exceeding K1 between the signals from the sensors 28, 34.

If the count value C1 does not exceed the maximum count value MaxC1 (step 52) and the diagnostic routine has not run for the duration of a diagnostic count value K2 which is representative of a complete diagnostic operation (step 54), then the diagnostic routine continues around another loop (step 46). The duration K2 of a diagnostic operation is set in the EMS 38 and may, for example, be in the region of 600 seconds.

If the count value C1 does exceed the maximum count value MaxC1 (step 56), then the currently set value of MaxC1 is replaced (step 58) by the current count value C1 (MaxC1=C1). If at any time (step 60) the maximum count value MaxC1 exceeds the value of K2, it indicates that a fault condition exists which lies with the intercooler system 22 and which fault has existed for longer than K2 (e.g. 600 seconds). Under those circumstances, a failure is flagged to the driver/user by illuminating the MIL and is stored in the EMS 38 for later diagnosis during vehicle servicing.

If during a diagnostic operation the temperature difference between the sensor signals drops to or below the threshold K1, then in this embodiment the count value C1 is reset to zero (step 62). In other embodiments it may prove beneficial to decrement rather than reset the count value C1.

By replacing the maximum count value Max C1 with the current count value C1 if C1 exceeds MaxC1 (step 58), the EMS 38 uses as a failure threshold the maximum difference in temperature across the intercooler 20 which is sensed 28, 34 during a journey. This stage of the diagnostic routine also ensures that, if a fault condition arises, the fault flag is set for at least the remainder of that particular journey.

In order to protect the diagnostic routine from false alarms, it has been found advantageous by the applicants to suspend or disable the diagnostic routine at least temporarily under certain circumstances. In particular, this may be found advantageous during periods of high load on the engine 12, such as might occur under conditions of high boost from the supercharger 18. This reduces transient effects experienced in the difference in air temperature sensed across the intercooler 20, which may be experienced under high boost until cooling from the intercooler 20 can take effect on the increased rush of air. To protect against false alarms, the applicants have found it useful to suspend or disable the diagnostic routine during many conditions of high load, such as might result from using the vehicle at speeds greater than a predetermined limit set at for example 120km/h.

By using a temperature sensors 28, 34 in combination with a counter 40, the diagnosis of potential faults with the intercooler system 22 can be spread over a longer period of time K2 than it could otherwise by, for example, comparing differences between the sensed temperatures at a single point in time or over short periods. The diagnostic arrangement of this invention provides an advantageous diagnostic routine for intercooler systems of vehicles because the routine is not limited to running only during predetermined driving cycles, as such driving cycles may not occur with suitable frequency or convenience for reliable monitoring of intercooler operation in vehicles.

## Claims

1. A diagnostic arrangement for an intercooler (20) of an engine (12), comprising:
an inlet (30) for passing charge air into said intercooler and an outlet (36) for passing charge air from said intercooler towards one or more inlet ports (120) of said engine;
a first sensor (28) positioned upstream of said intercooler;
a second sensor (34) positioned downstream of said intercooler; and
a controller (38) which communicates with said sensors and which is arranged in use to perform a diagnostic operation on said intercooler,
**characterised in that**, said sensors (28, 34) comprise air temperature sensors which provide intercooler inlet and outlet temperature signals to said controller (38) and **in that**, during a said diagnostic operation, said controller performs a comparison (step 46) between said temperature signals and flags an intercooler fault (step 60; MIL) if there exists, for a predetermined period of time (K2), a sensed difference in temperature between said inlet and outlet temperature signals, which sensed difference exceeds a programmed difference threshold (K1).

2. A diagnostic arrangement according to Claim 1, said controller (38) further comprising a counter (40), wherein during a said diagnostic operation said controller (38) periodically compares said sensed difference with said programmed difference threshold (K1) and increments said counter by a count value (step 50) if said sensed difference exceeds said programmed difference threshold (step 48).

3. A diagnostic arrangement according to Claim 2, wherein said controller (38) decrements or clears said counter (step 62) if during a said diagnostic operation said sensed difference is determined to be below said programmed difference threshold (K1).

4. A diagnostic arrangement according to Claim 2 or Claim 3, wherein said controller (38) stores a maximum count value (MaxC1) and during a said diagnostic operation compares a current said count value (C1) with said maximum count value and, if said current count value exceeds said maximum count value, replaces for at least one successive said diagnostic operation said maximum count value with said current count value (step 58).

5. A diagnostic arrangement according to any one of Claims 2 to 4, wherein said controller (38) stores a diagnostic count value (K2) which is related to said predetermined period of time and, during a said diagnostic operation, compares said maximum count value (MaxC1) with said diagnostic count value.

6. A diagnostic arrangement according to Claim 5, wherein, if said maximum count value (MaxC1) does not exceed said diagnostic count value (K2), said controller (38) performs a next comparison (step 54; step 46) between said sensed difference and said programmed difference threshold (K1).

7. A diagnostic arrangement according to Claim 5, wherein, if said maximum count value (MaxC1) exceeds said diagnostic count value (K2), said controller (38) flags a said intercooler fault (step 56; MIL).

8. A diagnostic arrangement according to any preceding claim, said engine (12) comprising a supercharged engine of a vehicle (10) and said intercooler (20) being disposed downstream of a supercharger (18) of said engine, wherein said controller (38) suspends or abandons a said diagnostic operation on said intercooler (20) during one or more of the following: a period of high load on said engine; a period of high boost from said supercharger; and a vehicle speed which is above a predetermined level.

9. A diagnostic arrangement according to any preceding claim, said intercooler (20) comprising a liquid cooled intercooler which is provided in use with coolant by a coolant pump (26), wherein a said intercooler system fault is indicative of a potential or actual fault with the delivery of said coolant by said pump (26) or in the operation of said coolant pump itself.

10. A diagnostic arrangement according to any preceding claim, comprising an on-board-diagnostic (OBD) arrangement for monitoring the operation of said intercooler (20).

11. A method for diagnosing operation of an intercooler (20) having an inlet (30) for passing charge air into said intercooler and an outlet (36) for passing charge air from said intercooler towards one or more inlet ports (120) of an engine (12), **characterised in that** the method includes:
providing intercooler inlet and outlet temperatures signals (28, 34) indicative of the temperature of charge air entering said inlet (30) and exiting said outlet (36) respectively;
comparing (step 46) said inlet and outlet temperature signals to provide a sensed difference therebetween; and
flagging an intercooler fault (step 60; MIL) if there exists, for a predetermined period of time (K2) a said sensed difference which exceeds a programmed difference threshold (K1).

12. An article of manufacture comprising:
a computer storage medium (380) having a computer program encoded therein for diagnosing an intercooler (20) of an engine (12), said intercooler comprising an inlet (30) for passing charge air into said intercooler and an outlet (36) for passing charge air from said intercooler towards one or more inlet ports (120) of said engine, **characterised in that** said computer program comprises:
code for determining (step 46) a sensed difference in temperature of charge air entering said inlet (30) and exiting said outlet (36) respectively; and
code for flagging an intercooler fault (step 60; MIL) if there exists, for a predetermined period of time (K2), a said sensed difference which exceeds a programmed difference threshold (K1).

## Patentansprüche

1. Diagnoseanordnung für einen Luftladekühler (20) eines Motors (12), umfassend:
einen Einlass (30) für den Durchtritt von Ladeluft in den Luftladekühler und einen Auslass (36) für den Durchtritt von Ladeluft von dem Ladeluftkühler in Richtung einer Einlassöffnung (120) bzw. mehrerer Einlassöffnungen (120) des Motors;
einen ersten Sensor (28), der vor dem Ladeluftkühler positioniert ist;
einen zweiten Sensor (34), der nach dem Ladeluftkühler positioniert ist; und
eine Steuervorrichtung (38), der mit den Sensoren kommuniziert und die im Betrieb beim Gebrauch angeordnet ist, um einen Diagnosevorgang an dem Ladeluftkühler vorzunehmen;
**dadurch gekennzeichnet, dass** die Sensoren (28, 34) Lufttemperatur-Sensoren umfassen, die für die Steuervorrichtung (38) Temperatursignale des Ladeluftkühlereinlasses und -auslasses bereitstellen, und **dadurch**, dass die Steuervorrichtung während eines solchen Diagnosevorgangs einen Vergleich (Schritt 46) zwischen den Temperatursignalen durchführt und einen Fehler (Schritt 60; MIL) des Ladeluftkühlers anzeigt, falls ein gefühlter Temperaturunterschied zwischen den Einlass- und Auslasstemperatursignalen während einer vorgegebenen Zeitdauer (K2) auftritt, wobei der gefühlte Unterschied eine programmierte Unterschiedsschwelle (K1) überschreitet.

2. Diagnoseanordnung nach Anspruch 1, bei der die Steuervorrichtung (38) weiterhin eine Zählvorrichtung (40) umfasst, wobei die Steuervorrichtung (38) während eines solchen Diagnosevorgangs den gefühlten Unterschied regelmäßig mit der programmierten Unterschiedsschwelle (K1) vergleicht und die Zählvorrichtung durch einen Zählwert (Schritt 50) inkrementiert, wenn der gefühlte Unterschied die programmierte Unterschiedsschwelle (Schritt 48) überschreitet.

3. Diagnoseanordnung nach Anspruch 2, wobei die Steuervorrichtung (38) die Zählvorrichtung (Schritt 62) dekrementiert bzw. zurückstellt, wenn während eines solchen Diagnosevorgangs festgestellt wird, dass der gefühlte Unterschied unterhalb der programmierten Unterschiedsschwelle (K1) liegt.

4. Diagnoseanordnung nach Anspruch 2 oder Anspruch 3, wobei die Steuervorrichtung (38) einen maximalen Zählwert (MaxC1) speichert und während eines solchen Diagnosevorgangs einen solchen aktuellen Zählwert (C1) mit dem maximalen Zählwert vergleicht, und, falls der aktuelle Zählwert den maximalen Zählwert überschreitet, den maximalen Zählwert zumindest für einen nachfolgenden Diagnosevorgang durch den aktuellen Zählwert (Schritt 58) ersetzt.

5. Diagnoseanordnung nach einem der Ansprüche 2 bis 4, wobei die Steuervorrichtung (38) einen Diagnose-Zählwert (K2) speichert, der in Bezug zu dem vorgegebenen Zeitraum steht und während eines solchen Diagnosevorgangs den maximalen Zählwert (MaxC1) mit dem Diagnose-Zählwert vergleicht.

6. Diagnoseanordnung nach Anspruch 5, wobei die Steuervorrichtung (38) einen nächsten Vergleich (Schritt 54; Schritt 46) zwischen dem gefühlten Unterschied und der programmierten Unterschiedsschwelle (K1) anstellt, wenn der maximale Zählwert (MaxC1) den Diagnose-Zählwert (K2) nicht überschreitet.

7. Diagnoseanordnung nach Anspruch 5, wobei die Steuervorrichtung (38) einen Fehler des Ladeluftkühlers (Schritt 56; MIL) anzeigt, wenn der maximale Zählwert (MaxC1) den Diagnose-Zählwert (K2) überschreitet.

8. Diagnoseanordnung nach einem der vorherigen Ansprüche, bei dem der Motor (12) einen aufgeladenen Motor eines Fahrzeugs (10) umfasst und der Ladeluftkühler (20) nach einem Auflader (18) des Motors angeordnet ist, wobei die Steuervorrichtung (38) einen solchen Diagnosevorgang bei dem Ladeluftkühler (20) während einem oder mehreren der nachstehenden Fälle aussetzt bzw. einstellt: einem Hochlastzeitraum bei dem Motor; einem Zeitraum, bei dem der Ladedruck durch den Auflader verstärkt ist; und einer Fahrzeuggeschwindigkeit, die oberhalb des vorgegebenen Niveaus liegt.

9. Diagnoseanordnung nach einem der vorherigen Ansprüche, wobei der Ladeluftkühler (20) einen flüssiggekühlten Ladeluftkühler (20) umfasst, der im Betrieb durch eine Kühlmittelpumpe (26) mit einem Kühlmittel versehen wird, wobei ein Fehler der Ladeluftkühler-Anlage kennzeichnend ist für einen eventuellen bzw. tatsächlichen Fehler bei der Lieferung des Kühlmittels durch die Pumpe (26) bzw. beim Betrieb der Kühlpumpe selbst.

10. Diagnoseanordnung nach einem der vorherigen Ansprüche, umfassend eine bordeigene Diagnoseanordnung (OBD) zum Überwachen des Ladeluftkühlers (20).

11. Verfahren zur Diagnose des Betriebs eines Ladeluftkühlers (20) mit einem Einlass (30) für den Durchtritt von Ladeluft in den Ladeluftkühler und einem Auslass (36) für den Durchlass von Ladeluft aus dem Ladeluftkühler in Richtung einer Einlassöffnung (120) bzw. mehrerer Einlassöffnungen (120) eines Motors (12), das **dadurch gekennzeichnet ist, dass** das Verfahren einschließt:
das Bereitstellen von Temperatursignalen (28, 34) des Ladeluftkühlereinlasses und des Ladeluftkühlerauslasses, die kennzeichnend sind für die Ladelufttemperatur, die in den Einlass (30) eintritt bzw. den Auslass (36) verlässt;
das Vergleichen (Schritt 46) der Temperatursignale von Einlass- und Auslass, um einen zwischen diesen gefühlten Unterschied verfügbar zu machen; und
das Anzeigen eines Fehlers bei dem Ladeluftkühler (Schritt 60; MIL), falls ein gefühlter Unterschied für den vorgegebenen Zeitraum (K2), der eine programmierte Unterschiedsschwelle (K1) überschreitet, besteht.

12. Erzeugnis, umfassend:
Ein Speichermedium (380) für einen Rechner mit einem darin kodierten Rechnerprogramm für die Diagnose eines Ladeluftkühler (20) eines Motors (12), wobei der Ladeluftkühler einen Einlass (30) für den Durchtritt von Ladeluft in den Ladeluftkühler und einen Auslass (36) für den Durchtritt von Ladeluft aus dem Ladeluftkühler in Richtung einer Einlassöffnung (120) oder mehrerer Einlassöffnungen (120) des Motors umfasst; **gekennzeichnet dadurch, dass** das Rechnerprogramm umfasst:
einen Code zum Festlegen (Schritt 46) eines gefühlten Temperaturunterschieds der Ladeluft, die in den Einlass (30) eintritt bzw. den Austritt (36) verlässt; und
einen Code zum Anzeigen eines Fehlers des Ladeluftkühlers (Schritt 60, MIL), falls ein gefühlter Unterschied für einen vorgegebenen Zeitraum (K2) besteht, der eine programmierte Unterschiedsschwelle (K1) überschreitet.

## Revendications

1. Agencement diagnostique pour un refroidisseur de l'air suralimenté (20) d'un moteur (12), comprenant :
une entrée (30) pour faire passer l'air suralimenté dans ledit refroidisseur de l'air suralimenté et une sortie (36) pour faire passer l'air suralimenté dudit refroidisseur de l'air suralimenté vers un ou plusieurs orifices d'entrée (120) dudit moteur ;
un premier capteur (28) positionné en amont dudit refroidisseur de l'air suralimenté ;
un deuxième capteur (34) positionné en aval dudit refroidisseur de l'air suralimenté ; et
un contrôleur (38) qui communique avec lesdits capteurs et qui est agencé en utilisation pour effectuer une opération de diagnostic sur ledit refroidisseur de l'air suralimenté,
**caractérisé en ce que** lesdits capteurs (28, 34) comprennent des capteurs de température d'air qui fournissent des signaux de températures d'entrée et de sortie du refroidisseur de l'air suralimenté au dit contrôleur (38) et **en ce que**, au cours d'une dite opération de diagnostic, ledit contrôleur effectue une comparaison (étape 46) entre lesdits signaux de températures et indique un défaut du refroidisseur de l'air suralimenté (étape 60 ; MIL) s'il existe, pendant une période de temps prédéterminée (K2), une différence détectée de températures entre lesdits signaux de températures d'entrée et de sortie, laquelle différence détectée dépasse un seuil de différence programmé (K1).

2. Agencement diagnostique selon la revendication 1, ledit contrôleur (38) comprenant en outre un compteur (40), dans lequel au cours d'une dite opération de diagnostic ledit contrôleur (38) compare périodiquement ladite différence détectée au dit seuil de différence programmé (K1) et incrémente ledit compteur d'une valeur de compte (étape 50) si ladite différence détectée dépasse ledit seuil de différence programmé (étape 48).

3. Agencement diagnostique selon la revendication 2, dans lequel ledit contrôleur (38) décrémente ou efface ledit compteur (étape 62) si, au cours d'une dite opération de diagnostic, il est déterminé que ladite différence détectée est inférieure au dit seuil de différence programmé (k1).

4. Agencement diagnostique selon la revendication 2 ou la revendication 3, dans lequel ledit contrôleur (38) stocke une valeur de compte maximale (MaxC1) et, au cours d'une dite opération de diagnostic, compare une dite valeur de compte actuelle (C1) à ladite valeur de compte maximale et, si ladite valeur de compte actuelle dépasse ladite valeur de compte maximale, remplace, pendant au moins une dite opération de diagnostic successive, ladite valeur de compte maximale par ladite valeur de compte actuelle (étape 58).

5. Agencement diagnostique selon l'une quelconque des revendications 2 à 4, dans lequel ledit contrôleur (38) stocke une valeur de compte de diagnostic (K2) qui est associée à ladite période de temps prédéterminée et, au cours d'une dite opération de diagnostic, compare ladite valeur de compte maximale (MaxC1) à ladite valeur de compte de diagnostic.

6. Agencement diagnostique selon la revendication 5, dans lequel, si ladite valeur de compte maximale (MaxC1) ne dépasse pas ladite valeur de compte de diagnostic (K2), ledit contrôleur (38) effectue une comparaison suivante (étape 54 ; étape 46) entre ladite différence détectée et ledit seuil de différence programmé (k1).

7. Agencement diagnostique selon la revendication 5, dans lequel, si ladite valeur de compte maximale (MaxC1) dépasse ladite valeur de compte de diagnostic (K2), ledit contrôleur (38) indique un défaut du refroidisseur de l'air suralimenté (étape 56 ; MIL).

8. Agencement diagnostique selon l'une quelconque des revendications précédentes, ledit moteur (12) comprenant un moteur suralimenté d'un véhicule (10) et ledit refroidisseur de l'air suralimenté (20) étant disposé en aval d'un compresseur (18) dudit moteur, dans lequel ledit contrôleur (38) suspend ou abandonne une dite opération de diagnostic sur ledit refroidisseur de l'air suralimenté (20) au cours d'une ou plusieurs de ce qui suit : une période de forte charge sur ledit moteur ; une période de forte suralimentation dudit compresseur ; et une vitesse de véhicule qui est supérieure à un niveau prédéterminé.

9. Agencement diagnostique selon l'une quelconque des revendications précédentes, ledit refroidisseur de l'air suralimenté (20) comprenant un refroidisseur de l'air suralimenté à refroidissement liquide auquel il est fourni en utilisation du liquide de refroidissement par une pompe à liquide de refroidissement (26), dans lequel un défaut de système de refroidisseur de l'air suralimenté indique un défaut potentiel ou réel dans l'alimentation dudit liquide de refroidissement par ladite pompe (26) ou dans le fonctionnement de ladite pompe à liquide de refroidissement proprement dite.

10. Agencement diagnostique selon l'une quelconque des revendications précédentes, comprenant un agencement diagnostique embarqué (OBD) pour surveiller le fonctionnement dudit refroidisseur de l'air suralimenté (20).

11. Procédé pour diagnostiquer le fonctionnement d'un refroidisseur de l'air suralimenté (20) ayant une entrée (30) pour faire passer l'air suralimenté dans ledit refroidisseur de l'air suralimenté et une sortie (36) pour faire passer l'air suralimenté dudit refroidisseur de l'air suralimenté vers un ou plusieurs orifices d'entrée (120) d'un moteur (12), **caractérisé en ce que** le procédé comprend les étapes consistant à :
fournir des signaux de températures d'entrée et de sortie du refroidisseur de l'air suralimenté (28, 34) qui indiquent respectivement la température de l'air suralimenté entrant dans ladite entrée (30) et la température de l'air suralimenté sortant de ladite sortie (36) ;
comparer (étape 46) lesdits signaux de températures d'entrée et de sortie pour fournir une différence détectée entre ceux-ci ; et
indiquer un défaut du refroidisseur de l'air suralimenté (étape 60 ; MIL) s'il existe, pendant une période de temps prédéterminée (K2), une dite différence détectée qui dépasse un seuil de différence programmé (k1).

12. Article de fabrication comprenant :
un support de stockage informatique (380) sur lequel est codé un programme informatique pour diagnostiquer un refroidisseur de l'air suralimenté (20) d'un moteur (12), ledit refroidisseur de l'air suralimenté comprenant une entrée (30) pour faire passer l'air suralimenté dans ledit refroidisseur de l'air suralimenté et une sortie (36) pour faire passer l'air suralimenté dudit refroidisseur de l'air suralimenté vers un ou plusieurs orifices d'entrée (120) dudit moteur, **caractérisé en ce que** ledit programme informatique comprend :
un code pour déterminer (étape 46) une différence détectée respectivement de la température de l'air suralimenté entrant dans ladite entrée (30) et de la température de l'air suralimenté sortant de ladite sortie (36) ; et
un code pour indiquer un défaut du refroidisseur de l'air suralimenté (étape 60 ; MIL) s'il existe, pendant une période de temps prédéterminée (K2), une dite différence détectée qui dépasse un seuil de différence programmé (k1).
